# EUROPÄISCHE PATENTSCHRIFT

(11) **EP 2 207 691 B1**
(45) Veröffentlichungstag und Bekanntmachung des Hinweises auf die Patenterteilung: **20.07.2011**
(21) Anmeldenummer: 08837403.8
(22) Anmeldetag: 09.10.2008
(51) Int. Cl.: B60G 15/06, F16F 9/54, F16F 13/16

(54) **FEDERBEINLAGER**
SPRING STRUT BEARING
PALIER DE JAMBE DE SUSPENSION

(30) Priorität: 10.10.2007 DE 102007048784
(43) Veröffentlichungstag der Anmeldung: 21.07.2010
(73) Patentinhaber: ZF Friedrichshafen AG, 88038 Friedrichshafen (DE)
(72) Erfinder: HAN, Kyung rok, 88046 Friedrichshafen (DE)
(86) Internationale Anmeldenummer: PCT/DE2008/050030
(87) Internationale Veröffentlichungsnummer: WO 2009/046712

(56) Entgegenhaltungen:
- DE-A1- 10 153 007
- DE-A1-102004 032 470
- DE-B3-102004 051 112
- DE-C1- 19 951 693
- FR-A- 2 671 839
- JP-A- 60 056 616
- JP-A- 2004 231 091

## Beschreibung

Die Erfindung betrifft ein Federbeinlager nach dem Oberbegriff des Patentanspruches 1.

Ein Federbeinlager zur Schwingungen isolierenden Lagerung des oberen Endes eines Federbeins in einem Kraftfahrzeug geht beispielsweise aus der DE 10 2004 051 112 B3 hervor. Diese bekannte Ausführung weist ein Gehäuse auf, das den Einbau des Federbeinlagers in ein Kraftfahrzeug ermöglicht. Zur Verbindung des oberen Endes des Federbeins mit dem Federbeinlager dient ein Innenteil. Das Innenteil ist seinerseits in einer durch wenigstens einen Elastomerkörper gebildeten Arbeitsfeder aufgenommen. Der Elastomerkörper zur Schwingungen dämpfenden Aufnahme des Innenteils weist eine konstante Kraft-Weg-Charakteristik beziehungsweise Moment-Winkel-Charakteristik auf, die sich aus dem verwendeten Werkstoff ergibt. Diese Charakteristiken des Elastomerkörpers werden aufwendig in Fahrversuchen ermittelt. Dabei muss das Fahrzeug die gestellten Anforderungen hinsichtlich Fahrkomfort und Fahrsicherheit gleichermaßen erfüllen. Der Lagerung des oberen Endes eines Federbeins in einem Kraftfahrzeug kommt eine entscheidende Bedeutung für die gesamte Radaufhängung eines Kraftfahrzeugs zu. Nachteilig bei den bisher bekannten Ausführungen ist, dass eine Änderung der Dämpfung nur durch den Austausch des gesamten Federbeinlagers möglich ist. Eine wünschenswerte flexible Anpassung an das spezifische Fahrverhalten des Fahrzeugführers oder an wechselnde Fahrbahnverhältnisse ist auf diese Weise nicht realisierbar.

Aus der DE 10 2004 032 470 A1 ist ferner eine Lagerung des oberen Endes eines Federbeins mittels eines an jedem Fahrzeugrad vorhandenen Federbeinlagers bekannt, bei der ein Elektromagnet zur Einstellung des Höhenniveaus des Fahrzeugrades zum Einsatz kommt. Dabei ist das Innenteil des Federbeinlagers als bewegbarer Anker zwischen zwei den Anker umgebenden Spulen gelagert. Mittels dieser Lösung kann das Kraftfahrzeug insgesamt abgesenkt oder angehoben werden. Eine Änderung der Lagercharakteristik beziehungsweise der Dämpfungseigenschaften des Federbeinlagers ist damit jedoch ebenfalls nicht möglich.

Darüber hinaus ist aus der DE 101 53 007 A1 eine Ausführung für ein Federbeinlager bekannt, das zur Lagerung des oberen Endes eines Federbeines ein Innenteil aufweist. Dieses Innenteil ist in einen elastomeren Lagerkörper eingebettet. Der Elastomerkörper ist mit dem Innenteil in einem hydraulisch verstellbaren Kolben aufgenommen. Der Kolben kann bezogen auf die Lagermittenachse in axialer Richtung zwischen einer oberen und einer unteren Position verschoben werden. Mit dieser Lösung ist eine Anhebung oder Absenkung des Kraftfahrzeugs möglich. Änderungen der Lagerungseigenschaften sind auch mit einer derartigen Variante nicht umsetzbar.

Auch aus der DE 199 51 693 C1 ist ein Federbeinlager zur Lagerung des oberen Endes eines Federbeins in einem Kraftfahrzeug bekannt. Diese Ausführung verfügt über ein Innenteil zur Befestigung des Federbeinlagers am oberen Ende des Federbeins. Über sein Gehäuse wird das Federbeinlager mit dem Kraftfahrzeug verbunden. Zur Dämpfung der von der Fahrbahn herrührenden Schwingungen dient ein Elastomerkörper. Dieser ist als eine Arbeitsfeder ausgebildet und stellt eine Verbindung zwischen dem Innenteil und dem Gehäuse dar. Da mit einfachen Elastomerlagern nur ansteigende dynamische Steifigkeiten erreichbar sind, werden Federbeinlager zusätzlich mit einer hydraulischen Dämpfung ausgestattet. Diese weist eine spezifische Dämpfungscharakteristik auf. Hierzu ist das aus der DE 199 51 693 C1 bekannte Federbeinlager mit wenigstens zwei mit einer Flüssigkeit befüllten Kammern und einem Kanal zur Flüssigkeit leitenden Verbindung der Kammern ausgestattet. In einer Modellbetrachtung stellt ein derartiges Federbeinlager eine Verknüpfung verschiedener Federn dar, wobei eine Feder durch die Arbeitsfeder und die andere Feder durch das hydraulische System, bestehend aus den Kammern, die über einen Kanal miteinander verbunden sind, gebildet wird.

Nachteilig bei dieser Lösung ist jedoch, dass die flexible Anpassung an sich ändernde Fahrbahnbedingungen nicht gegeben ist.

Aus der JP 60 056 616 A ist ferner eine Federbeinaufnahme mit Kammern 31, 32 (s. Figur 2 und Zusammenfassung) bekannt, die getrennt voneinander jeweils über Durchschläuche 35 mit Hydraulikfluid druckbeaufschlagt werden können. Dieses wird in Abhängigkeit von der Fahrzeuggeschwindigkeit und Lenkradwinkel veranlasst, und korrespondiert mit dem Wanken des Fahrzeugs, das somit sensiert werden kann. Wenn die eine Kammer (32) druckbeaufschlagt wird, fließt nämlich das Hydraulikfluid der anderen Kammer (31) in ein Reservoir ab, d.h., es sind zwei unabhängige Kanäle vorhanden.

Der Erfindung liegt die Aufgabe zugrunde, ein Federbeinlager bereitzustellen, das einen einfachen Aufbau aufweist und darüber hinaus mindestens zwei verschiedene Dämpfungscharakteristiken bereitstellt. Das Federbeinlager sollte flexibel an sich ändernde Einflüsse der Fahrbahn auch im Zusammenhang mit Lenkbewegungen angepasst werden können und eine Voreinstellung der Dämpfung durch den Fahrzeugführer ermöglichen.

Die Erfindung löst diese Aufgabenstellung mit den Merkmalen des Patentanspruches 1. Weitere Ausgestaltungen sind Gegenstand der sich anschließenden Unteransprüche.

Ein zum Beispiel aus der o.g. DE 199 51693 C1 bekanntes, Federbeinlager zur Lagerung des oberen Endes eines Federbeines in einem Kraftfahrzeug mit:
- einem Innenteil zur Befestigung des Federbeinlagers am oberen Ende des Federbeins,
- einem Gehäuse zur Verbindung des Federbeinlagers mit dem Kraftfahrzeug,
- einer durch wenigstens einen Elastomerkörper gebildeten Arbeitsfeder zur Schwingungen dämpfenden Verbindung zwischen Innenteil und Gehäuse,
- wenigstens zwei mit einer Flüssigkeit befüllten Kammern und
- einem Kanal zur flüssigkeitsleitenden Verbindung der Kammern wurde erfindungsgemäß dahingehend weitergebildet, d.h. ist dadurch gekennzeichnet, dass der Kanal eine den Durchfluss regelnde Ventilschalteinheit aufweist.

Mit der erfindungsgemäßen Lösung wird eine sehr einfache Möglichkeit bereitgestellt, den Durchfluss des Kanals, also den Volumenstrom innerhalb des Kanals zu regeln. Die Ventilschalteinheit dient dabei dazu, den Kanal vollständig oder teilweise zu öffnen beziehungsweise zu verschließen. So wird die Dämpfung der Schwingungen bei verschlossenem Kanal ausschließlich über den als Arbeitsfeder ausgebildeten Elastomerkörper realisiert, während bei geöffnetem Kanal in Abhängigkeit des zur Verfügung < - > = < > gestellten Kanalquerschnittes zusätzlich die Vorteile einer hydraulischen Dämpfung nutzbar sind. Kostenintensive und schwer kontrollierbare Lösungen, wie sie beispielsweise bei Einsatz rheologischer Flüssigkeiten gegeben sind, können mit der erfindungsgemäßen Lösung vermieden werden.

Eine erste Ausgestaltung der Erfindung geht dahin, dass die Ventilschalteinheit einen Elektromagneten aufweist. Durch die Verbindung der Ventilschalteinheit mit einem Elektromagneten kann die teilweise mechanische Lösung sinnvoll mit einem Elektromagneten ergänzt werden und stellt somit ein elektromagnetisches Ventil beziehungsweise ein elektromagnetisch unterstütztes Ventil dar. Der Elektromagnet weist die Vorteile auf, dass er ein vollständiges oder teilweises Öffnen und Schließen des Kanals ermöglicht und zwar mit sehr kurzen Schaltzeiten. Damit ist eine Anpassung der Dämpfungseigenschaften des erfindungsgemäßen Federbeinlagers an sich in zeitlich kurzen Abständen ändernde, vom Fahrbahnuntergrund herrührende Einflüsse gegeben. Ebenso kann eine Anpassung der Dämpfung auf beliebig definierbare Werte erfolgen. Das Fahrwerk ist somit vom Fahrer zum Beispiel auf eine sportliche oder eher Komfort orientierte Dämpfung einstellbar.

Eine besonders einfache Ausführungsform der erfindungsgemäßen Lösung besteht ferner darin, dass der Elektromagnet eine Spule und einen in dem Kanal gegen die Kraft einer Feder bewegbaren Anker aufweist. Somit ist der Anker unmittelbar in den Kanal integriert. Es sind folglich keine zusätzlichen Bauteile erforderlich, um den Kanalquerschnitt zu regeln. Die damit gegebene unmittelbare Einflussnahme auf die Durchflussmenge im Kanal führt zu einer Änderung der Dämpfungseigenschaften in Echtzeit.

Dabei ist es von besonderem Vorteil, wenn der Anker als ein Kolben ausgebildet ist. Der in seinem Aufbau einem Kolben entsprechende Anker führt zu einer fertigungstechnisch sehr einfach herzustellenden Lösung. So können die Führung und der als Kolben ausgebildete Anker als rotationssymmetrische Bauelemente ausgeführt sein, was zudem den Vorteil mit sich bringt, dass die Abdichtung gegenüber der Umgebung vereinfacht ist. Die in der Ventilschalieinheit vorhandene Feder, gegen die der Anker bewegbar ist, kann dazu verwendet werden, den Anker in seine Neutralstellung zurück zu bewegen.

Durch die Ausführung des Ankers als Kolben ist erfindungsgemäß daran gedacht, dass der Kolben zwischen den Endlagen "Kanal vollständig offen" und "Kanal vollständig verschlossen" hin und her bewegbar ist. Der besondere Vorteil der erfindungsgemäßen Lösung besteht jedoch darin, dass auch jede beliebige beziehungsweise erforderliche Zwischenstellung erreicht und eingestellt werden kann, so dass auch ein teilweiser Verschluss des Kanals und damit eine nur teilweise Reduzierung der Durchflussmenge der Hydraulikflüssigkeit zwischen den Kammern erreichbar ist.

Zur Umsetzung der zuvor beschriebenen Möglichkeiten wird weiterhin vorgeschlagen, dass das Federbeinlager eine belastungsabhängige Regelung des Spulenslromes der elektromagnetischen Ventilschalteinheit aufweist. Dabei liegt eine Regelung des Spulenstromes in Abhängigkeit von den auf das Federbeinlager einwirkenden und von der Radaufhängung herrührenden Schwingungen und Vibrationen ebenfalls im Bereich des Erfindungsgedankens. Unter belastungsabhängiger Regelung wird im Sinne der Erfindung also beispielsweise verstanden, dass die Stromstärke des Spulenstromes in Abhängigkeit von den über das Federbein in das Federbeinlager eingeleiteten Frequenzen geregelt wird. Die zu dämpfenden Schwingungen stellen dabei die Störgrößen einer Regelstrecke dar. Mittels einer angepassten und hierzu geeigneten Elektronik können sinnvoller Weise zur Ansteuerung des Elektromagneten Signale von den an der Radaufhängung vorhandenen Sensoren verwendet werden, um eine optimale Regelung des Federbeinlagers zu gewährleisten.

Eine aktive Regelung des Federbeinlagers kann zum Beispiel erreicht werden, indem Sensoren der Fahrzeugräder und der Lenkung Informationen im Sinne von Signalen erfassen, die in geeigneten Verarbeitungseinheiten gesammelt und beispielsweise mit Informationen über die Straßenverhältnisse und/oder Fahrbedingungen verknüpft werden. Anhand der gesammelten Informationen lassen sich optimale Dämpfungswerte für das Federbeinlager bestimmen. Zusätzlich kann auch hier der Fahrer Voreinstellungen der Dämpfung vornehmen, wie zum Beispiel eine sportliche oder Komfort orientierte Abstimmung des Fahrwerkes.

Ein weiterer Vorschlag nach der Erfindung geht dahin, dass die Ventilschalteinheit an der Außenseite des Gehäuses des Federbeinlagers befestigt ist. Somit beeinflusst die Ventilschalteinheit die Eigenschaften des Federbeinlagers im Übrigen nicht. Das Federbeinlager ist auf dies Art und Weise kompakt ausführbar. Dies ist insbesondere von Bedeutung, weil der im Kraftfahrzeug im Bereich des Federbeinlagers vorhandene Bauraum begrenzt ist.

Zum Schutz der Ventilschalteinheit vor mechanischen Beschädigungen wird gemäß einer vorteilhaften Ausgestaltung der Erfindung vorgeschlagen, dass die Ventilschalteinheit durch eine Kappe gegen mechanische Beschädigungen geschützt an dem Federbeinlager befestigt ist. Diese Kappe kann ihrerseits durch Pufferelemente aus Elastomerwerkstoffen, wie Gummi, gegen äußere Einflüsse geschützt sein.

Das erfindungsgemäße Federbeinlager weist insgesamt erhebliche Vorteile hinsichtlich der Geräuschentwicklung, der Vibrationsdämpfung und der erforderlichen Härte auf. Mit dem Federbeinlager können mindestens zwei unterschiedliche Dämpfungscharakteristiken erreicht werden. Diese sind zumindest in einer axialen und/oder radialen Richtung gegeben. Jedoch kann auch eine Dämpfung erreicht werden, die aus Rotationsbewegungen der Kolbenstange herrührt. Dies stellt einen weiteren Vorteil gegenüber bisher bekannten Lösungen dar. Damit ist es möglich, eine flexibel an die vom Fahrbahnuntergrund herrührenden Schwingungen anpassbare Radaufhängung für ein Kraftfahrzeug bereitzustellen, deren Dämpfungseigenschaften variierbar sind. Hierzu können unterstützend elektronische Sensoreinheiten oder Sensoren zum Einsatz kommen. Eine besonders vorteilhafte Kombination ist bei Verwendung elektronisch kontrollierbarer Stoßdämpfer oder elektronisch kontrollierbarer Lenkungssysteme gegeben. Damit können in jedem Fahrzustand die Dämpfungscharakteristiken optimiert werden.

Ein weiterer besonderer Vorteil besteht in der direkten lenkungsbedingten Einflussnahme auf die Charakteristik des Federbeinlagers. So ist eine Unterscheidung zwischen einer hohen und geringen Fahrzeuggeschwindigkeit und der hierbei erforderlichen Lenkaktionen gegeben. Zudem werden für die Erfindung die Vorteile von elektromagnetisch schaltbaren Ventilen genutzt, die eine sehr kurze Reaktionszeit von weniger als 0,1 Sekunden und eine vorzügliche Lebensdauer aufweisen.

Die Erfindung wird nachfolgend anhand der beigefügten Zeichnungen näher erläutert. Die gezeigten Ausführungsbeispiele stellen keine Einschränkung auf die dargestellten Varianten dar, sondern dienen lediglich der Erläuterung des Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: eine schematisch sehr stark vereinfachte Darstellung eines erfindungsgemäßen Federbeinlagers,
- Figur 2:: die Ventilschalteinheit in schematisch vereinfachter Darstellung in der Schaltstellung "Kanal vollständig offen",
- Figur 3:: die Ventilschalteinheit in einer schematisch stark vereinfachten Darstellung in der Schaltstellung "Kanal vollständig verschlossen",
- Figur 4:: eine Schnittdarstellung des oberen Endes eines Federbeins mit einem daran befestigten erfindungsgemäßen Federbeinlager.

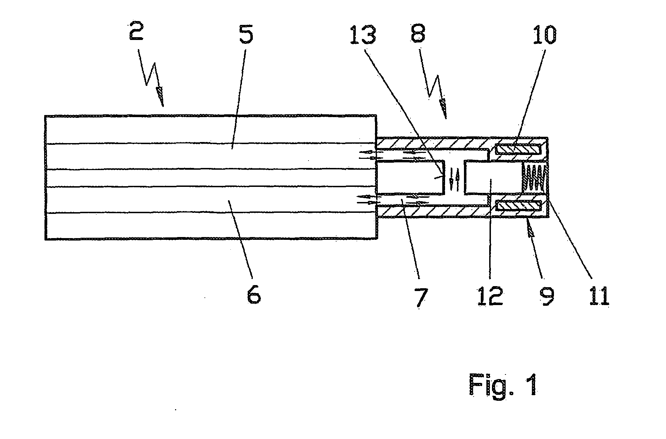

In der Darstellung der Figur 1 ist schematisch stark vereinfacht und nur andeutungsweise das Federbeinlager 2 gezeigt. Dieses weist zwei Kammern 5 und 6 auf, die über einen Flüssigkeit leitenden Kanal 7 miteinander verbunden sind. Der Kanal 7 geht von den Kammern 5, 6 in die insgesamt mit 8 bezeichnete Ventilschalteinheit über. Die Ventilschalteinheit 8 verfügt über einen als Kolben ausgebildeten Anker 12, der gegen die Kraft einer Feder 11 bewegbar ist. Der Anker 12 ragt dabei in den Kanal 7 hinein. Anker 12, Feder 11 und die den Anker 12 umgebende Spule 10 bilden gemeinsam einen Elektromagneten 9. Die Ventilschalt.einheit 8 ist, wie dies aus der Figur 1 ersichtlich wird, außen am Gehäuse 4 des Federbeinlagers 2 angebracht. Dem als Kolben ausgebildeten Anker 12 gegenüberliegend ist eine Kontaktfläche 13 vorhanden, an der die korrespondierende Oberfläche des Ankers 12 bei verschlossenem Kanal zur Anlage kommt.

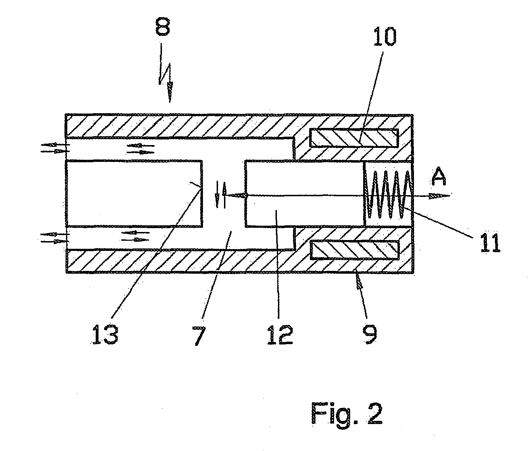

Die als Einzelheit in der Figur 2 schematisch stark vereinfachte Darstellung der Ventilschalteinheit 8 zeigt eine geöffnete Stellung des Ankers 12, so dass der Austausch der Flüssigkeit zwischen den Kammern 5 und 6 über den Flüssigkeit leitenden Kanal 7 ungehindert erfolgen kann. Das Federbeinlager gemäß der Erfindung weist in dieser Schaltstellung des Ankers 12 sowohl eine Dämpfung über die als Elastomerkörper ausgebildete Arbeitsfeder 3, als auch eine hydraulische Dämpfung zur Reduzierung der von der Fahrbahn herrührenden Schwingungen auf. Nur andeutungsweise sind in der Figur 2 durch Pfeile mögliche Strömungsrichtungen der Flüssigkeit innerhalb des Kanals 7 veranschaulicht. Ferner ist die Bewegbarkeit des kolbenförmigen Ankers 12 durch einen Doppelpfeil "A" angedeutet. Die spiralförmige Feder 11 ist hier in einer komprimierten Form gezeigt.

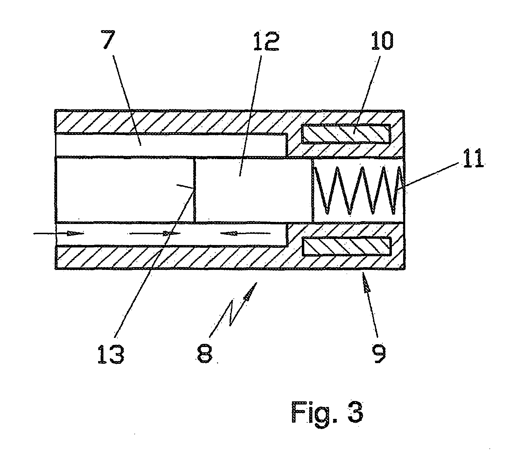

Im Unterschied zu der Darstellung in Figur 2 zeigt die Figur 3 eine Schaltstellung, bei der der Kanal 7 vollständig verschlossen ist. Der Verschluss wird durch den als Kolben ausgeführten Anker 12 erreicht. Die Stirnfläche des Ankers 12 ist dabei in unmittelbarem Berührungskontakt mit der korrespondierenden Kontaktfläche 13 der Ventilschalteinheit 8. Die Feder 11 ist in dieser Position des Ankers 12 vollständig dekomprimiert. Die Änderung des Schaltzustandes des Ankers 12 und damit die Beeinflussung des Kanalquerschnittes des Kanals 7 erfolgt durch eine geeignete Bestromung der Spule 10, des Elektromagneten 9. Bei der in Figur 3 gezeigten Schaltstellung der Ventilschalteinheit 8 erfolgt eine Dämpfung innerhalb des Federbeinlagers ausschließlich über die als Elastomerkörper ausgeführte Arbeitsfeder 3.

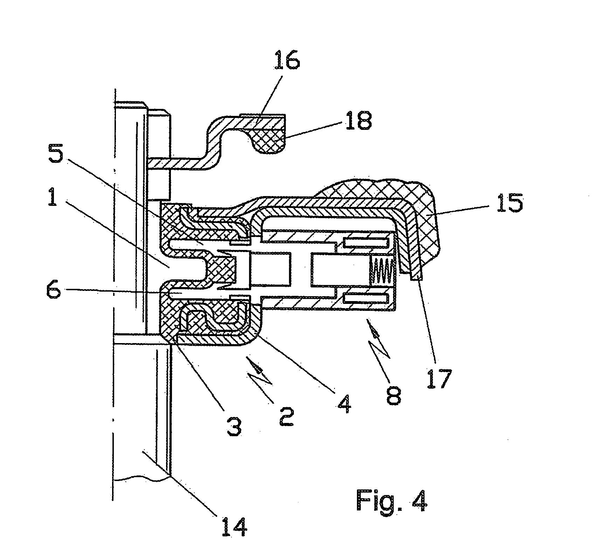

In der Figur 4 ist aus Veranschaulichungsgründen eine vereinfachte Darstellung einer Möglichkeit des Einbaus eines erfindungsgemäßen Federbeinlagers 2 in ein Federbein gezeigt. Dabei weist das obere Ende des Federbeins, welches hier als Kolbenstange 14 ausgebildet ist, eine Verjüngung auf. Auf diesem verjüngten, domartigen Bereich der Kolbenstange 14 ist das Innenteil 1 des Federbeinlagers 2 aufgesetzt. Dieses Innenteil 1 weist einen etwa mittig vorhandenen, ringförmigen Bund auf. Oberhalb und unterhalb dieses ringförmigen Bundes des Innenteiles 1 ist jeweils eine Kammer 5 beziehungsweise 6 vorhanden. Die Kammern 5 und 6 sind in der zuvor bereits beschriebenen Weise über den Kanal 7 flüssigkeitsleitend miteinander verbunden. Die Kammern 5 und 6 sind hierbei in die Arbeitsfeder 3 integriert, die vorliegend aus einem Elastomerkörper besteht. Für die Erfindung von untergeordneter Bedeutung und daher nicht näher bezeichnet sind einzelne metallische Versteifungseinlagen in dem Elastomerkörper. Das Federbeinlager 2 weist seitlich abragend die Ventilschalteinheit 8 auf, die an der Außenseite des Gehäuses 4 des Federbeinlagers 2 vorhanden ist. Oberhalb des Federbeinlagers 2 befindet sich ferner ein durch Muttern an der Kolbenstange 14 befestigtes Domlager 16 mit einem Puffer 18 aus einem Elastomer. Zum Schutz vor mechanischen Beanspruchungen verfügt das gezeigte Ausführungsbeispiel eines Federbeinlagers 2 über eine Kappe 17, die zumindest den Bereich der Ventilschalteinheit 8 abdeckt. Oberhalb der Kappe 17 ist darüber hinaus ein Gummipuffer 15 vorhanden, der mechanische Stöße von den darunter befindlichen Bauteilen abhält.

### Bezugszeichenliste

- 2: 1 Innenteil Federbeinlager
- 3: Arbeitsfeder (Elastomerkörper)
- 4: Gehäuse
- 5: Kammer
- 6: Kammer
- 7: Kanal
- 8: Ventilschalteinheit
- 9: Elektromagnet
- 10: Spule
- 11: Feder
- 12: Anker
- 13: Kontaktfläche
- 14: Kolbenstange
- 15: Gummipuffer
- 16: Domlager
- 17: Kappe
- 18: Puffer

## Patentansprüche

1. Federbeinlager zur Lagerung des oberen Endes eines Federbeins in einem Kraftfahrzeug mit:
- einem Innenteil (1) zur Befestigung des Federbeinlagers (2) am oberen Ende des Federbeins,
- einem Gehäuse (4) zur Verbindung des Federbeinlagers (2) mit dem Kraftfahrzeug,
- einer durch wenigstens einen Elastomerkörper gebildeten Arbeitsfeder (3) zur Schwingungen dämpfenden Verbindung zwischen Innenteil (1) und Gehäuse (4),
- wenigstens zwei mit einer Flüssigkeit befüllten Kammern (5, 6) und
- einem Kanal (7) zur Flüssigkeit leitenden Verbindung der Kammern (5, 6), **dadurch gekennzeichnet, dass**
der Kanal (7) eine den Durchfluss regelnde Ventilschalteinheit (8) aufweist.

2. Federbeinlager nach Anspruch 1, **dadurch gekennzeichnet, dass** die Ventilschalteinheit (8) einen Elektromagneten (9) aufweist.

3. Federbeinlager nach Anspruch 2, **dadurch gekennzeichnet, dass** der Elektromagnet (9) eine Spule (10) und einen in dem Kanal (7) gegen die Kraft einer Feder (11) bewegbaren Anker (12) aufweist.

4. Federbeinlager nach Anspruch 3, **dadurch gekennzeichnet, dass** der Anker (12) als Kolben ausgebildet ist.

5. Federbeinlager nach Anspruch 3, **dadurch gekennzeichnet, dass** der als Kolben ausgebildete Anker (12) zwischen den zwei Endlagen "Kanal vollständig offen" und "Kanal vollständig verschlossen" hin- und her bewegbar ist.

6. Federbeinlager nach einem der Ansprüche 3 bis 5, **dadurch gekennzeichnet, dass** das Federbeinlager eine belastungsabhängige Regelung des Spulenstromes aufweist.

7. Federbeinlager nach einem der vorstehend genannten Ansprüche, **dadurch gekennzeichnet, dass** die Ventilschalteinheit (8) an der Außenseite des Gehäuses (4) des Federbeinlagers (2) befestigt ist.

8. Federbeinlager nach einem der vorstehend genannten Ansprüche, **dadurch gekennzeichnet, dass** die Ventilschalteinheit (8) durch eine Kappe (17) gegen mechanische Beschädigung geschützt an dem Federbeinlager (2) befestigt ist.

## Claims

1. Spring strut bearing for mounting the top end of a spring strut in a motor vehicle, having:
- an inner part (1) for fastening the spring strut bearing (2) to the top end of the spring strut,
- a housing (4) for connecting the spring strut bearing (2) to the motor vehicle,
- a working spring (3), formed by at least one elastomer body, for providing a vibration-damping connection between the inner part (1) and housing (4),
- at least two chambers (5, 6) filled with a liquid, and
- a duct (7) for providing a liquid-conducting connection between the chambers (5, 6), **characterized in that**
the duct (7) has a throughflow-regulating valve switching unit (8).

2. Spring strut bearing according to Claim 1, **characterized in that**
the valve switching unit (8) has an electromagnet (9).

3. Spring strut bearing according to Claim 2, **characterized in that**
the electromagnet (9) has a coil (10) and an armature (12) which is movable in the duct (7) counter to the force of a spring (11).

4. Spring strut bearing according to Claim 3, **characterized in that**
the armature (12) is designed as a piston.

5. Spring strut bearing according to Claim 3, **characterized in that**
the armature (12) which is designed as a piston is movable back and forth between the two end positions "duct fully open" and "duct fully closed".

6. Spring strut bearing according to one of Claims 3 to 5, **characterized in that** the spring strut bearing has load-dependent regulation of the coil current.

7. Spring strut bearing according to one of the preceding claims, **characterized in that** the valve switching unit (8) is fastened to the outside of the housing (4) of the spring strut bearing (2).

8. Spring strut bearing according to one of the preceding claims, **characterized in that** the valve switching unit (8), protected against mechanical damage by a cap (17), is fastened to the spring strut bearing (2).

## Revendications

1. Palier de jambe de suspension pour le support de l'extrémité supérieure d'une jambe de suspension dans un véhicule automobile, comprenant :
- une partie intérieure (1) pour la fixation du palier de jambe de suspension (2) à l'extrémité supérieure de la jambe de suspension,
- un boîtier (4) pour la connexion du palier de jambe de suspension (2) au véhicule automobile,
- un ressort de travail (3) formé par au moins un corps en élastomère pour la connexion amortissant les oscillations entre la partie intérieure (1) et le boîtier (4),
- au moins deux chambres (5, 6) remplies d'un liquide et
- un canal (7) pour la connexion fluidique des
chambres (5, 6),
**caractérisé en ce que**
le canal (7) présente une unité de commutation à soupape (8) régulant le débit.

2. Palier de jambe de suspension selon la revendication 1, **caractérisé en ce que** l'unité de commutation à soupape (8) présente un électroaimant (9).

3. Palier de jambe de suspension selon la revendication 2, **caractérisé en ce que** l'électroaimant (9) présente une bobine (10) et un induit (12) déplaçable dans le canal (7) à l'encontre de la force d'un ressort (11).

4. Palier de jambe de suspension selon la revendication 3, **caractérisé en ce que** l'induit (12) est réalisé sous forme de piston.

5. Palier de jambe de suspension selon la revendication 3, **caractérisé en ce que** l'induit (12) réalisé sous forme de piston peut être déplacé en va-et-vient entre les deux positions de fin de course "canal complètement ouvert" et "canal complètement fermé".

6. Palier de jambe de suspension selon l'une quelconque des revendications 3 à 5, **caractérisé en ce que** le palier de jambe de suspension présente une régulation du flux de bobine dépendant des contraintes.

7. Palier de jambe de suspension selon l'une quelconque des revendications précédentes, **caractérisé en ce que** l'unité de commutation à soupape (8) est fixée sur le côté extérieur du boîtier (4) du palier de jambe de suspension (2).

8. Palier de jambe de suspension selon l'une quelconque des revendications précédentes, **caractérisé en ce que** l'unité de commutation à soupape (8) est fixée sur le palier de jambe de suspension (2) de manière protégée par un capuchon (17) contre les endommagements mécaniques.
